# EUROPEAN PATENT APPLICATION

(11) **EP 3 498 927 A1**
(43) Date of publication of application: **19.06.2019**
(21) Application number: 18777682.8
(22) Date of filing: 14.03.2018
(51) Int. Cl.: E04B 1/19, E04B 1/58

(54) **COUPLING STRUCTURE FOR FIBER REINFORCED PLASTIC STRUCTURE MEMBER AND MACHINING METHOD FOR COUPLING SECTION**

(30) Priority: 29.03.2017 JP 2017064746
(71) Applicant: Fukui Prefectural Government, Fukui-shi Fukui 910-8580 (JP)
(72) Inventor: TOMITA Koichi, Fukui-shi Fukui 910-0102 (JP); YAMAGUCHI Taichi, Fukui-shi Fukui 910-0102 (JP)
(74) Representative: Office Freylinger
(86) International application number: PCT/JP2018/009855
(87) International publication number: WO 2018/180478

(57) **Abstract**

Provided are a machining method and a coupling structure to be used as a structure member by joining a coupling member to an end of a fiber reinforced plastic structure member. A coupling structure for a fiber reinforced plastic structure member includes: a fiber reinforced plastic structure member 1 obtained by narrowing an end of the fiber reinforced plastic structure member; a reinforcing member 4 which inhibits expansion by adhering to the outer circumference of the narrowed portion of the fiber reinforced plastic structure member; a locking member 2 which is provided with a through-hole 2a in the axial direction and which fits into a narrowed portion 1a of the fiber reinforced plastic structure member 1; a coupling anchoring member 3 which is provided with a rotation stop on the side thereof; and a spacer 5 which restricts only a rotation of the coupling anchoring member 3 and which is attached between a member 7 to be coupled and an end of the fiber reinforced plastic structure member 1 by passing the coupling anchoring member 3 through so as to be able to slide in the axial direction. The coupling anchoring member 3 is screwed into and coupled to threads 7a of the member 7 to be coupled by rotating the spacer 5.

## Description

### Technical Field

The present invention relates to a coupling structure, in which a coupling member is joined to a coupling portion of a fiber reinforced plastic structure member, and to a method for machining the coupling portion.

### Background Art

Although a fiber reinforced plastic structure member is excellent in specific strength and in specific rigidity and so on, it is seldom used alone as a structure member, and it is therefore used in an integrated state where a metallic coupling member is joined to a coupling portion.

For example, in construction structures, as a space truss member for a large span lightweight roof of a gymnastics facility or the like, for a radio telescope, for a space station, and so on, a coupling member is used for a coupling portion at both ends of a pipe-shaped fiber reinforced plastic structure member.

Moreover, as a robot arm of a picking parallel link robot which performs the alignment and/or assembly of components, a coupling member is used for a coupling portion at both ends of a pipe-shaped fiber reinforced plastic structure member.

Generally, in joining a coupling member to a fiber reinforced plastic structure member, a method is employed for fitting the coupling member into an opening portion serving as a coupling portion and fixing the coupling member with an adhesive.

In a truss member or the like for transmitting a large load, as described in Non-Patent Literature (hereinafter NPL) 1, a method is employed for fitting a coupling member into an opening portion serving as a coupling portion and passing a locking pin through an overlapping portion therebetween for joining.

Moreover, in Patent Literature (hereinafter PTL) 1, as a structure member which can achieve a reduction in cost and a reduction in weight, there is disclosed a structure member including: a fiber-reinforced plastic hollow structure converging toward an end thereof; and a rod end, the fiber-reinforced plastic hollow structure including a screw portion which the rod end screws into, the screw portion being provided at an end opening of the fiber-reinforced plastic hollow structure.

Furthermore, in PTL 2, as a fiber-reinforced plastic truss member excellent in heat-resistant cycle, there is disclosed a fiber reinforced plastic truss member, in which a tapered locking portion whose bore diameter becomes smaller toward the end thereof is provide in the inner peripheral surface of a fiber reinforced plastic cylindrical body, and in which a tapered locking portion in close contact with the locking portion of the cylindrical body is provided in an outer circumferential face of an engaging portion of an end metal fixture, the end metal fixture including a flange portion and a spacer of an engaging portion which is projectingly molded in one side surface in the axial direction of the flange portion.

### Citation List

### Patent Literature

PTL 1: Japanese Laid-Open Patent Publication No. 2003-328498
PTL 2: Japanese Laid-Open Utility Model Publication No. 7-4998

### Non Patent Literature

NPL 1: Keisuke Yonemaru et al., "Development of CFRP Truss (part 3)": SHIMIZU COOPERATION Research Report No. 76, October, 2002, 23, pp. 23- 24

### Summary of Invention

A method for fitting a coupling member into a coupling portion of a fiber reinforced plastic structure member and fixing the same with an adhesive is straightforward, but the shear strength of the adhesive is equal to or less than one-several tenths of the strength in the axial direction of the structure member, so in order to obtain a withstand load corresponding to the structure member, the junction area has to be larger by lengthening the engaging portion. However, lengthening the engaging portion has a drawback of increasing the weight of the coupling member.

Moreover, with the method for fitting a coupling member into a coupling portion of a fiber reinforced plastic structure member and passing a locking pin through the overlapping portion therebetween for coupling, a high joining strength can be obtained by an engaging portion shorter than a method for fixing only with an adhesive. However, there is a drawback that the withstand load of the pipe decreases due to the boring for passing the locking pin therethrough. Moreover, the thermal expansion of the structure member and the thermal expansion of the coupling member are mutually constrained via the locking pin, so in an environment with a large temperature change the locking pin and peripheral portion thereof might be damaged by a thermal stress. Furthermore, in a case where the pipe is made from a carbon fiber reinforced plastic, the locking pin might directly contact the carbon fiber in a side face of the boring to cause galvanic corrosion and/or hydrogen embrittlement and damage the pipe.

Moreover, in the structure member described in PTL 1, there are problems that the manufacturing process becomes complicated and that the machining cost increases, because the fiber reinforced plastic hollow structure narrowed at both ends thereof is integrally molded, a liner (mold material) used for molding cannot be easily taken out and in addition, a mold is required in a step of resin impregnation, and so on. Moreover, a method is used for molding a fiber tissue and thereafter impregnating the same with resin, but this method has a drawback of easily causing poor impregnation of the resin. Furthermore, in approaches, such as braiding and filament winding, used for molding of the fiber tissue, it is difficult to increase the percentage of the reinforced fiber to be orientated in the axial direction, and therefore there is a drawback that the withstand load in the axial direction is poorer than a fiber reinforced plastic structure member manufactured by sheet winding or a pultrusion method.

Moreover, in the fiber reinforced plastic truss member described in PTL 2, because the flange portion of the end metal fixture and the locking portion are integrated, a preload cannot be applied to the contact surface with the locking portion of the cylindrical body. Therefore, when an alternate load acts, the contact surface of the locking portion is relatively slippery, which might lead to wearing and slipping-out in the axial direction.

Then, an object of the present invention is to provide a coupling structure for a fiber reinforced plastic structure member which has a high-strength and is excellent in durability while reliably locking a coupling member to a coupling portion and a method for machining the coupling portion.

### Solution to Problem

In order to solve the above-described problems, a coupling structure for a fiber reinforced plastic structure member includes: a reinforcing member closely attached to an outer circumferential face of a tapered coupling portion of the fiber reinforced plastic structure member; a locking member oppositely arranged and attached to the reinforcing member while closely attaching to an inner peripheral surface of the coupling portion; and a coupling anchoring member which passes through the locking member and is coupled and fixed to a member to be coupled and which sets the coupling portion to a sandwiched state by means of the reinforcing member and the locking member.

Moreover, according to a second aspect of the present invention, the coupling structure for a fiber reinforced plastic structure member includes: the coupling anchoring member provided with a rotation stop on a side thereof; and a spacer which restricts only a rotation of the coupling anchoring member and which is attached between the member to be coupled and an end of the fiber reinforced plastic structure member by passing the coupling anchoring member therethrough so as to be able to slide in an axial direction. Here, the coupling anchoring member is screwed into and coupled to the threads of the member to be coupled by rotating the spacer.

According to a third aspect of the present invention, the coupling structure for a fiber reinforced plastic structure member includes: the coupling anchoring member provided with a key groove on a side thereof; a spacer which is provided with threads on a side thereof and which is attached by passing the coupling anchoring member through between the member to be coupled and an end of the fiber reinforced plastic structure member; and a setscrew which screws into the threads of the spacer by inserting a front end thereof into the key groove of the coupling anchoring member. Here, the setscrew restricts only a rotation of the coupling anchoring member with respect to the spacer, and is inserted into the key groove of the coupling anchoring member so as to be able to slide in the axial direction. The coupling anchoring member is screwed into and coupled to the threads of the member to be coupled by rotating the spacer.

According to a fourth aspect of the present invention, the locking member and the coupling anchoring member are integrated.

According to a fifth aspect of the present invention, the coupling structure for a fiber reinforced plastic structure member includes: a reinforcing member closely attached to an outer circumferential face of a tapered coupling portion of the fiber reinforced plastic structure member; a locking member oppositely arranged and attached to the reinforcing member while closely attaching to an inner peripheral surface of the coupling portion; a coupling fixture which is coupled and fixed to the member to be coupled by screwing into the locking member; and a female screw member which screws into the coupling fixture and which sets the coupling portion to a sandwiched state by means of the reinforcing member and the locking member.

According to a sixth aspect of the present invention, the coupling portion is molded accompanying at least one cut in one end thereof.

According to a seventh aspect of the present invention, the fiber reinforced plastic structure member includes a plastic material reinforced with a long fiber.

According to an eighth aspect of the present invention, the reinforcing member is molded by winding a fiber bundle impregnated with resin around the outer circumferential face of the coupling portion.

According to a ninth aspect of the present invention, a method for machining a coupling portion of a coupling structure, in which a locking member is closely attached to the inner peripheral surface of the coupling portion of a fiber reinforced plastic structure member, includes: a heating step of heating and softening the coupling portion; a deforming step of deforming the coupling portion by abutting a mold against an outer circumferential face of the coupling portion which has been softened by the heating step; and a molding step of molding the coupling portion into a tapered shape by crimping a locking member to the inner peripheral surface of the coupling portion which has been deformed by the deforming step, and clamping the coupling portion between the mold.

According to a tenth aspect of the present invention, in the deforming step, the coupling portion is deformed by abutting the inner peripheral surface of the reinforcing member against the outer circumferential face of the coupling portion which has been softened by the heating step.

According to an eleventh aspect of the present invention, the method further includes a cutting step of providing at least one cut in an end surface of the pipe.

According to a twelfth aspect of the present invention, heating means in the heating step is induction heating.

According to a thirteenth aspect of the present invention, a matrix resin of the fiber reinforced plastic structure member is a thermosetting plastic, and the matrix resin is not completely thermally-cured prior to the deforming step.

According to a fourteenth aspect of the present invention, a heating temperature in the heating step is equal to or greater than a glass transition temperature of the matrix resin.

### Advantageous Effects of Invention

As described above, with the coupling structure of the present invention, a ready-made fiber reinforced plastic structure member can be coupled at any length, and by supporting, with the strength of the reinforcing member, a tensile load in the axial direction which acts on the coupling anchoring member, high-strength coupling which does not depend on the shear strength of an adhesive is enabled without using a locking pin. Moreover, the coupling portion is set so as to be sandwiched by the reinforcing member and the locking member, so even in a case where an alternate load acts in the axial direction of the coupling anchoring member, looseness and/or wearing hardly occur in the coupling structure, and coupling with high reliability can be achieved.

### Brief Description of Drawings

Fig. 1 is a side view illustrating a schematic configuration of a coupling structure for a fiber reinforced plastic structure member according to a first embodiment of the present invention, a part of which is illustrated in cross-section.
Fig. 2 is a perspective view schematically illustrating a method for attaching a reinforcing member according to the first embodiment of the present invention.
Fig. 3 is a perspective view schematically illustrating another method for attaching a reinforcing member according to the first embodiment of the present invention.
Fig. 4 is a perspective view schematically illustrating a spacer according to the first embodiment of the present invention.
Fig. 5 is a perspective view schematically illustrating another spacer according to the first embodiment of the present invention.
Fig. 6 is a side view illustrating a schematic configuration of a coupling structure for a fiber reinforced plastic structure member according to a second embodiment of the present invention, a part of which is illustrated in cross-section.
Fig. 7A-7E is a process chart illustrating an outline step of narrowing an end of the fiber reinforced plastic structure member according to the first embodiment of the present invention.
Fig. 8A-8E is a process chart illustrating the outline step of narrowing an end of the fiber reinforced plastic structure member according to the first embodiment of the present invention and at the same time attaching a reinforcing member.
Fig. 9 is a side view illustrating the overview of a test piece for tensile according to an example of the present invention, a part of which is illustrated in cross-section.
Fig. 10 is a side view illustrating the overview of a test piece for tensile used in comparison with an example of the present invention, a part of which is illustrated in cross-section.

### Description of Embodiments

Hereinafter, the present invention will be described in detail on the basis of the embodiments illustrated in the attached drawings. However, the components, shapes, relative arrangement, and the like given in these embodiments are not intended to limit the range of the present invention only thereto, but are just illustrative examples, unless otherwise specifically stated.

### First Embodiment

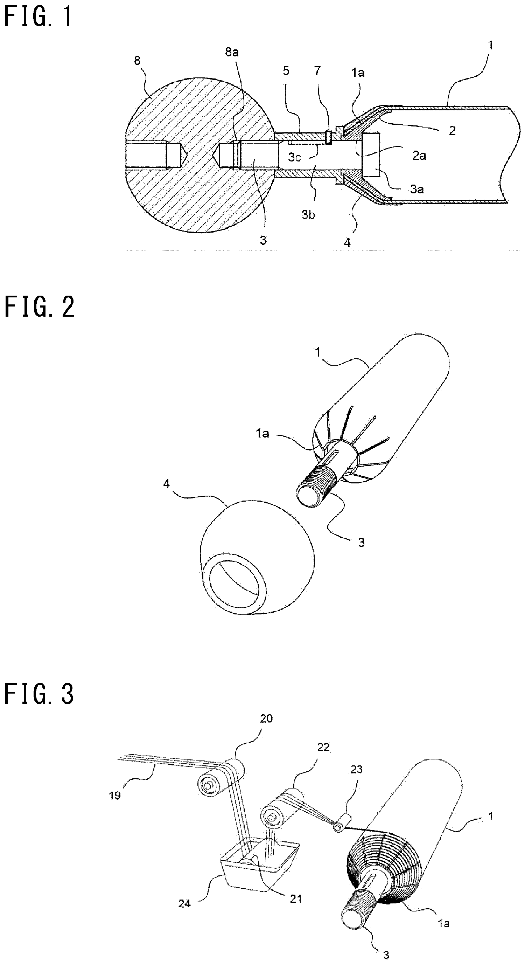

Fig. 1 is a schematic configuration of a coupling structure for a fiber reinforced plastic structure member according to a first embodiment of the present invention, a part of which is illustrated in cross-section. The coupling structure includes: a reinforcing member 4 closely attached to an outer circumferential face of an end opening portion which is a tapered coupling portion of a fiber reinforced plastic structure member 1; a locking member 2 oppositely arranged and attached to the reinforcing member 4 while closely attaching to an inner peripheral surface of the coupling portion; and a coupling anchoring member 3 which passes through the reinforcing member 4 and the locking member 2 and is coupled and fixed to a member 8 to be coupled and which sets the coupling portion of the structure member 1 to a sandwiched state by means of the reinforcing member 4 and the locking member 2.

The structure member 1 includes a pipe-shaped compact made from a fiber-reinforced plastic material, and an end opening portion serving as the coupling portion is formed in a narrowed portion 1a which has been narrowed into a tapered shape. The examples of a fiber-reinforced plastic material include a carbon-fiber-reinforced plastic material, a fiberglass reinforced plastic, and the like. The coupling portion formed in the structure member 1 may be provided other than in the end opening portion, and is not limited in particular if it is provided in accordance with the structural design using a structure member. For example, the coupling portion may be formed in a middle portion of the structure member 1.

Moreover, the coupling portion of the structure member 1 is formed in a tapered shape so as to be able to sandwich and securely attach the reinforcing member 4 and the locking member 2 by means of the coupling anchoring member 3, as described later. In this case, the sandwiching means a state where the reinforcing member 4 and the locking member 2 crimp and clamp the coupling portion. Here, the locking member 2 may adhere to or may not adhere to the coupling portion if it crimps the coupling portion so as not to shift therefrom.

The cylindrical narrowed portion 1a serving as the coupling portion can be formed into a tapered shape by tilting a strip portion, which remains after partially cutting off the coupling portion along the axial direction, so as to be narrowed inward. Other than this method, there would be a method for forming the cylindrical narrowed portion 1a into a tapered shape by curving a part of the coupling portion inward and narrowing the tip portion of the cylindrical narrowed portion 1a inward.

The locking member 2 is formed into a truncated-conical cylindrical body so as to closely attach to the inner peripheral surface of the narrowed portion 1a, and in the center portion thereof an opening for passing a shaft portion 3b of the coupling anchoring member 3 therethrough is formed. Then, the locking member 2 is arranged at a position facing the reinforcing member 4. The locking member 2 can be molded if a material, such as a metallic material, a plastic material, or a ceramic material, for example, is used therefor.

The reinforcing member 4 is formed into a truncated-conical cylindrical body so as to closely attach to the outer circumferential face of the narrowed portion 1a, and reinforces the coupling portion by being in close contact with the outer circumferential face of the narrowed portion 1a. The reinforcing member 4 can be molded if a material, such as a metallic material or a fiber-reinforced plastic material, for example, is used therefor. The reinforcing member 4 is attached using a method for fitting and sticking a member, which has been machined into a predetermined shape in advance, onto the exterior of the narrowed portion 1a of the fiber reinforced plastic structure member 1, as illustrated in Fig. 2, or a method for winding a fiber impregnated with resin around the outer circumference of the narrowed portion 1a of the fiber reinforced plastic structure member 1, as illustrated in Fig. 3.

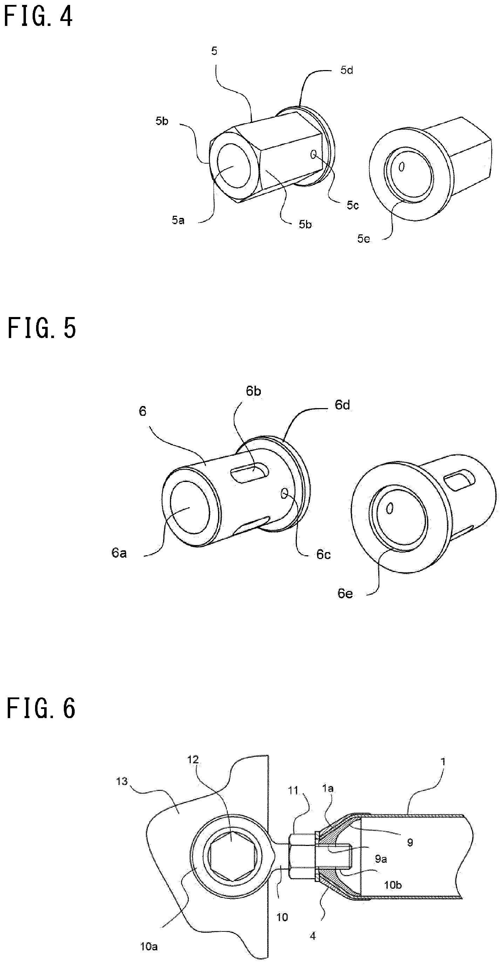

The coupling anchoring member has a head 3a with a diameter larger than a through-hole 2a of the locking member 2, and a key groove 3c is provided in the shaft portion 3b. As illustrated in Fig. 4, the spacer 5 includes: a through-hole 5a for passing the coupling anchoring member 3 therethrough; one or plurality of pairs of parallel faces 5b for using a wrench on the side thereof; threads 5c for attaching a setscrew 7; and a flange 5d for abutting against the reinforcing member 4. A release hole 5e for avoiding abutting against the locking member 2 is provided in the through-hole 5a on the flange 5c side. Note that the shape for using a wrench is not limited to one or plurality pairs of parallel flat planes, but for example as illustrated in Fig. 5 a spacer provided with one or plurality of dents 6b on the side thereof, or a spacer provided with one or plurality of projections (illustration is omitted) may be employed. Moreover, the flange 5d does not necessarily need to be integrally formed in the spacer 5, and the portion of the flange 5d may be separate as a washer.

The setscrew 7 constrains only the rotation of the coupling anchoring member 3 with respect to the spacer 5, and is inserted into the key groove 3c of the coupling anchoring member 3 so as to be able to slide in the axial direction, so that the coupling anchoring member 3 can be screwed into the threads 8a of the member 8 to be coupled by rotating the spacer 5 for coupling.

Along with the coupling with the member 8 to be coupled, a force pulling out in the axial direction acts on the locking member 2 which locks the coupling anchoring member 3, and by a reaction thereof the end of the reinforcing member 4 is pressed by the spacer 5. As the result, a compressive load will be added to the contact surface between the locking member 2 and the narrowed portion 1a, so that even in a case where an alternate load acts, a relative slip of the locking portion can be suppressed to prevent pulling-out due to wearing.

### Second Embodiment

Fig. 6 is a side view illustrating the schematic configuration of a coupling structure for a fiber reinforced plastic structure member according to a second embodiment of the present invention, a part of which is illustrated in cross-section. The fiber reinforced plastic structure member 1 and the reinforcing member 4 are the same as those of the first embodiment, and a locking member 9 is also generally the same as the locking member 2 of the first embodiment. However, in the locking member 9, threads 9a which screw into a screw portion of a coupling fixture 10 are provided in place of the through-hole.

The coupling fixture 10 includes a locking portion 10a which is attached, with a bolt 12, to a member 13 to be coupled and a male screw portion 10b, and is screwed into the threads 9a of the locking member 9 in a state where a female screw member 11 is screwed. A compressive load can be applied to the contact surface between the locking member 9 and the narrowed portion 1a by fastening the female screw member 11. However, because the female screw member 11 does not directly involve in coupling with the member 13 to be coupled, a compressive load can be optionally imparted to the contact surface between the locking member 9 and the narrowed portion 1a regardless of a force in the axial direction acting on the coupling fixture 10. Note that in Fig. 6, although the coupling fixture 10 is depicted in the shape of a ball joint, the shape of the locking portion is not limited thereto if the coupling fixture 10 includes a male screw which screws into the threads of the locking member 9.

In this embodiment, any compressive load can be applied to the contact surface between the locking member 9 and the locking portion of the fiber reinforced plastic structure member 1 by fastening the female screw member 11 which does not directly involve in coupling with the member 13 to be coupled. Therefore, even in applications in which an alternate load acts, a relative slip of the locking portion can be suppressed to prevent the pulling out due to wearing.

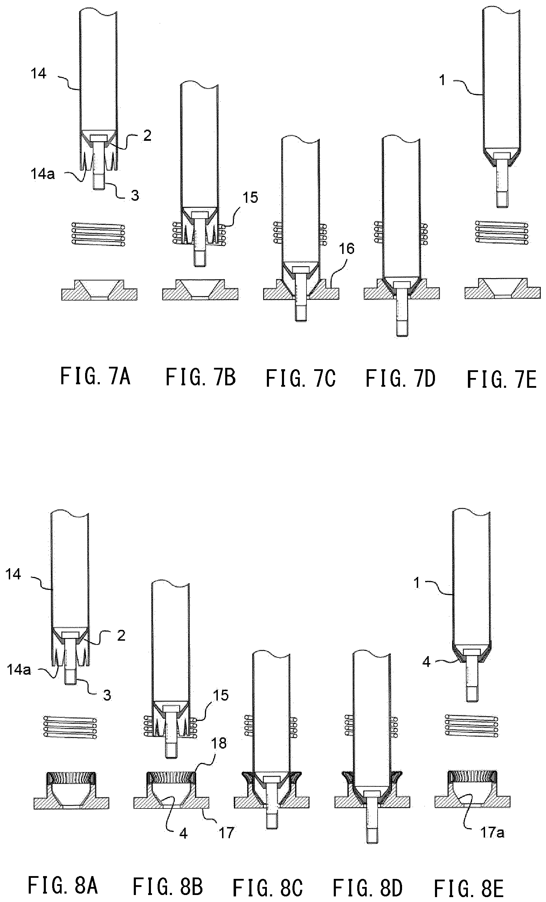

Fig. 7A-7E is a process chart illustrating the outline step of manufacturing the fiber reinforced plastic structure member 1 by narrowing an end of the fiber reinforced plastic structure member according to the first embodiment of the present invention. Fig. 7A illustrates a member insertion step, in which the locking member 2 penetrated by the coupling anchoring member 3 is inserted into the fiber reinforced plastic structure member 14 provided with a cut 14a at an end thereof. Then, in a heating step of Fig. 7B, the end of the pipe 14 is arranged inside a high frequency heating coil 15 and is heated to the softening temperature. Fig. 7C illustrates a deforming step, in which after the temperature of the end of the pipe 14 becomes a predetermined temperature, an end of the pipe 14 is pressed into the tapered mold 16 so as to be deformed and narrowed. Then, in a molding step illustrated in Fig. 7D, the coupling anchoring member 3 is pulled out to crimp the locking member 2 to the inner peripheral surface of the end opening portion serving as the coupling portion, so that the coupling portion of the pipe 14 is clamped and pressure-molded between the mold 16. As described above, by pressing in a softened state immediately after the deforming step, the coupling portion of the pipe 14 can be molded into a shape in which the locking member 2 and the reinforcing member 4 are in close contact with each other, and the conduction of heat to the mold 16 and the locking member 2 can be facilitated to shorten the cooling time.

Fig. 8A-8E is a process chart illustrating the outline step of narrowing an end of the fiber reinforced plastic structure member 14 and at the same time attaching the reinforcing member 4. A dent 17a, into which the reinforcing member 4 removably fits, is provided in a holder 17, and a guide 18 for guiding the end of the pipe 14 to the inner side of the reinforcing member 4 is attached to the opening side of the holder 17. This guide 18 has such an elasticity to withstand even the expansion due to a straight portion of the pipe 14. The machining method is generally the same as the step illustrated in Fig. 3 except that the reinforcing member 4 whose inner surface has been coated with an adhesive in advance is set to the holder 17. However, according to this method, the reinforcing member 4 can be attached at the same time when the end of the fiber reinforced plastic structure member 14 is narrowed and molded into a shape which the locking member 2 is in close contact with.

### [Examples]

A coupling portion was actually provided in a fiber-reinforced plastic pipe using the above-described method, and a tension test was conducted.

In this example, a CFRP pipe with an outer diameter 50 mm × an inner diameter 46 mm × a length 300 mm (manufactured by Hopec Corp.) was used as the fiber reinforced plastic structure member. The CFRP pipe was prepared by stacking a one-directional prepreg (3252S-10 manufactured by Toray Industries, Inc.) having a thickness of 0.1mm, i.e., six layers of 0 degrees, 13 layers of 90 degrees, and one layer of 0 degrees in the order from the outermost layer, using a sheet winding method, and then heating the same in a heat-curing furnace at approximately 130 degrees.

An extra-super-duralumin was used for the locking member, and from a round bar having a diameter 50 mm, a cylindrical body was cut out, which had a through-hole of the diameter of 16 mm along the central axis thereof and which had the outer shape of a truncated cone having the bottom surface diameter of 46 mm, height of 25 mm, and gradient angle of 25 degrees.

Moreover, a bolt with an M16 hexagon socket having the length of 100 mm (strength class 10.9) was used, as it is, for the coupling anchoring member.

The reinforcing member was prepared by winding a fiber bundle impregnated with resin around the outer circumferential face of the coupling portion. For the fiber bundle and impregnation resin, the regular tow TC-33 (made by FORMOSA PLASTICS) of PAN-based carbon fiber and an epoxy resin GM6800 (made by Blenny Giken Co., Ltd.) of a low viscosity were used, respectively.

For machining the coupling portion, a mold having a linear-tapered shape, which contracts in diameter with the gradient angle of 25 degrees, for the purpose of molding the coupling portion of the CFRP pipe into a tapered shape was prepared.

For machining the coupling portion, the release agent in the inner peripheral surface of the CFRP pipe was first removed with the sandpaper of #180, and then the end of the CFRP pipe was cut off to 30 mm from the end, at 12 places at equal intervals, into a triangular shape along the circumference thereof, and then the remaining strip-shaped portion was tilted so as to be narrowed inward, so that a linear taper of the gradient angle of 25 degrees can be formed.

Next, the bolt with a hexagon socket was passed through the locking member and inserted into the coupling portion, and then the coupling portion was heated to 150°C using a heat gun and press-fitted into the mold to deform the strip-shaped portion so as to be narrowed inward. Immediately after this, the front end of the bolt with a hexagon socket was passed through the through-hole of the mold and pulled, and then the strip-shaped portion was sandwiched by the mold and the locking member and then the coupling portion was molded into a tapered shape which closely adhered to the outer circumferential face of the locking member.

Attaching the reinforcing member was performed by a method for winding, by hand, a fiber bundle impregnated with resin, and then a step of winding the fiber bundle impregnated with resin up to the thickness of approximately 0.5 mm and curing the impregnated resin for 24 hours was repeated eight times to obtain the thickness of 4 mm.

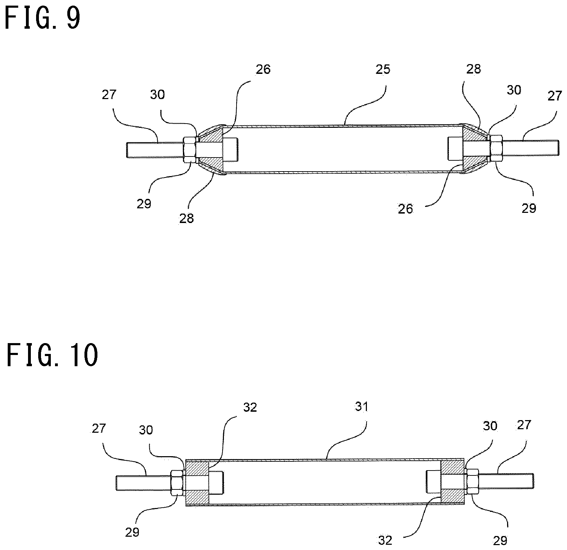

For joining the locking member to the coupling portion, the acrylic adhesive Y-610 (Cemedine Co., Ltd.) was used. The adhesive was applied from a space between the coupling portion and the locking member, and then a nut was attached and fastened to the bolt with a hexagon socket, so that the locking member was closely attached to the coupling portion, which was then left to stand for 24 hours at room temperature to be fixed. With the method described above, a coupling structure was provided at both ends of the CFRP pipe to obtain a test piece for tensile having the shape illustrated in Fig. 9.

Moreover, for the purpose of comparison, with a method for fitting a cylindrical locking member into the opening portion of a CFRP pipe and fixing the both with an adhesive, a test piece for tensile having the shape illustrated in Fig. 10 was prepared. For the CFRP pipe, the adhesive, and the bolt with a hexagon socket, the same ones as those of the above-described example were used, and the cylindrical locking member was also cut out from the same extra-super-duralumin A7075 as the locking member. The dimensions of the cylindrical locking member were set to the outer diameter 46 mm × inner diameter 16 mm × length 25 mm so as to slightly tightly-fit into the inner diameter of the CFRP pipe.

As the method for attaching the cylindrical locking member, the release agent of the inner peripheral surface of the CFRP pipe was removed with a sandpaper, and then an adhesive was thinly applied, and the cylindrical locking member penetrated by a bolt with a hexagon socket was press-fitted into the opening portion of the pipe, which was then left to stand for 24 hours at room temperature to be fixed.

For the tension test, the universal material testing machine UH-F1000kNI (Shimadzu Corporation) was used. The load range during the test was 200kN, and the tension test was conducted at the speed of 1 mm/minute. As the result, the maximum load of the comparison material was 88kN, whereas the maximum load of this example was 130kN and exhibited approximately 1.5 times the withstand load of the comparison material.

### Reference Signs List

1: fiber reinforced plastic structure member
1a: narrowed portion
2: locking member
2a: through-hole
3: coupling anchoring member
3a: head
3b: shaft portion
4: reinforcing member
5: spacer
5a: through-hole
5b: parallel face
5c: threads
5d: flange
5e: release hole
6: spacer
6a: through-hole
6b: dent
6c: threads
6d: flange
7: setscrew
8: member to be coupled
8a: threads
9: locking member
9a: threads
10: coupling fixture
10a: locking portion
10b: male screw portion
11: female screw member
12: bolt
13: member to be coupled
14: fiber reinforced plastic structure member
14a: cut
15: high frequency heating coil
16: mold
17: holder
17a: dent
18: guide
19: fiber bundle
20: relay roller
21: relay roller
22: relay roller
23: fiber feeding guide
24: resin bath
25: CFRP pipe provided with coupling portion which is machined into tapered shape
26: locking member in example
27: m16 bolt with hexagon socket
28: reinforcing member in example
29: m16 nut
30: washer
31: CFRP pipe
32: cylindrical locking member

## Claims

1. A coupling structure for a fiber reinforced plastic structure member, comprising:
a reinforcing member closely attached to an outer circumferential face of a tapered coupling portion of the fiber reinforced plastic structure member;
a locking member oppositely arranged and attached to the reinforcing member while closely attaching to an inner peripheral surface of the coupling portion; and
a coupling anchoring member which passes through the reinforcing member and the locking member and is coupled and fixed to a member to be coupled and which sets the coupling portion to a sandwiched state by means of the reinforcing member and the locking member.

2. The coupling structure for a fiber reinforced plastic structure member according to claim 1, comprising:
the coupling anchoring member provided with a rotation stop on a side thereof; and
a spacer which restricts only a rotation of the coupling anchoring member and which is attached between the member to be coupled and an end of the fiber reinforced plastic structure member by passing the coupling anchoring member therethrough so as to be able to slide in an axial direction, wherein
the coupling anchoring member is screwed into and coupled to the threads of the member to be coupled by rotating the spacer.

3. The coupling structure for a fiber reinforced plastic structure member according to claim 1, comprising:
the coupling anchoring member provided with a key groove on a side thereof;
a spacer which is provided with threads on a side thereof and which is attached by passing the coupling anchoring member through between the member to be coupled and an end of the fiber reinforced plastic structure member; and
a setscrew which screws into the threads of the spacer by inserting a front end thereof into the key groove of the coupling anchoring member, wherein
the setscrew restricts only a rotation of the coupling anchoring member with respect to the spacer, and is inserted into the key groove of the coupling anchoring member so as to be able to slide in the axial direction; and
the coupling anchoring member is screwed into and coupled to the threads of the member to be coupled by rotating the spacer.

4. The coupling structure for a fiber reinforced plastic structure member according to any one of claims 1 to 3, wherein the locking member and the coupling anchoring member are integrated.

5. A coupling structure for a fiber reinforced plastic structure member, comprising:
a reinforcing member closely attached to an outer circumferential face of a tapered coupling portion of the fiber reinforced plastic structure member;
a locking member oppositely arranged and attached to the reinforcing member while closely attaching to an inner peripheral surface of the coupling portion;
a coupling fixture which is coupled and fixed to the member to be coupled by screwing into the locking member; and
a female screw member which screws into the coupling fixture and which sets the coupling portion to a sandwiched state by means of the reinforcing member and the locking member.

6. The coupling structure for a fiber reinforced plastic structure member according to any one of claims 1 to 5, wherein the coupling portion is molded accompanying at least one cut in one end thereof.

7. The coupling structure for a fiber reinforced plastic structure member according to any one of claims 1 to 6, wherein the fiber reinforced plastic structure member includes a plastic material reinforced with a long fiber.

8. The coupling structure for a fiber reinforced plastic structure member according to any one of claims 1 to 7, wherein the reinforcing member is molded by winding a fiber bundle impregnated with resin around the outer circumferential face of the coupling portion.

9. A method for machining a coupling portion of a coupling structure, wherein a locking member is closely attached to an inner peripheral surface of the coupling portion of a fiber reinforced plastic structure member, the method comprising:
a heating step of heating and softening the coupling portion;
a deforming step of deforming the coupling portion by abutting a mold against an outer circumferential face of the coupling portion which has been softened by the heating step; and
a molding step of molding the coupling portion into a tapered shape by crimping a locking member to the inner peripheral surface of the coupling portion which has been deformed by the deforming step, and clamping the coupling portion between the mold.

10. The method for machining a coupling portion of a fiber reinforced plastic structure member according to claim 9, wherein in the deforming step, the coupling portion is deformed by abutting the inner peripheral surface of the reinforcing member against the outer circumferential face of the coupling portion which has been softened by the heating step.

11. The method for machining a coupling portion of a fiber reinforced plastic structure member according to claim 9 or 10, further comprising a cutting step of providing at least one cut in an end surface of the pipe.

12. The method for machining a coupling portion of a fiber reinforced plastic structure member according to any one of claims 9 to 11, wherein heating means in the heating step is induction heating.

13. The method for machining a coupling portion of a fiber reinforced plastic structure member according to any one of claims 9 to 12, wherein a matrix resin of the fiber reinforced plastic structure member is a thermosetting plastic, and wherein the matrix resin is not completely thermally-cured prior to the deforming step.

14. The method for machining a coupling portion of a fiber reinforced plastic structure member according to any one of claims 9 to 13, wherein a heating temperature in the heating step is equal to or greater than a glass transition temperature of the matrix resin.
